# EUROPÄISCHE PATENTSCHRIFT

(11) **EP 1 449 852 B1**
(45) Veröffentlichungstag und Bekanntmachung des Hinweises auf die Patenterteilung: **30.08.2006**
(21) Anmeldenummer: 04002293.1
(22) Anmeldetag: 03.02.2004
(51) Int. Cl.: C08B 31/00, C08B 31/12, C08B 11/00

(54) **Verfahren zur Herstellung von modifizierten Polysacchariden mit verbesserten hydrophoben Eigenschaften**
Process for making modified polysaccharides having improved hydrophobic properties
Procédé de préparation de polysaccharides modifiés ayant des propriétés hydrophobes améliorées

(30) Priorität: 08.02.2003 DE 10305144
(43) Veröffentlichungstag der Anmeldung: 25.08.2004
(73) Patentinhaber: THÜRINGISCHES INSTITUT FÜR TEXTIL- UND KUNSTSTOFF-FORSCHUNG e.V., 07407 Rudolstadt (DE)
(72) Erfinder: Kosan, Birgit, Dr., 07407 Rudolstadt (DE); Meister, Frank, Dr., 07407 Rudolstadt (DE)
(74) Vertreter: Brandenburg, Thomas

(56) Entgegenhaltungen:
- PATENT ABSTRACTS OF JAPAN Bd. 016, Nr. 399 (M-1300), 24. August 1992 (1992-08-24) & JP 04 133788 A (RICOH CO LTD), 7. Mai 1992 (1992-05-07) & DATABASE CHEMABS [Online] CHEMICAL ABSTRACTS SERVICE, COLUMBUS OHIO, US; 1993, "THERMAL RECORDING MATERIALS WITH OVERCOAT LAYER COMPRISING RESIN AND OXAZOLINE-TYPE CROSS-LINKING AGENT" XP002278999 gefunden im STN Database accession no. 118:113185
- JACOB JOHN & AL: "Grafting of Oxazoline Functional Group to Polycaprolactone" JOURNAL OF APPLIED POLYMER SCIENCE, Bd. 67, 1998, Seiten 1947-1955, XP002278246
- ANONYMOUS: "EPOCROS" INTERNET ARTICLE, [Online] XP002278330 Gefunden im Internet: URL:http://www.shokubai.co.jp/english/INNO VATION2000/6.html> [gefunden am 2004-04-28]

## Beschreibung

Die Erfindung betrifft ein Verfahren zur Herstellung von modifizierten Polysacchariden mit reaktiven Gruppen durch radikalische Pfropfung mit bifunktionellen Verbindungen. Die bifunktionellen Verbindungen stammen aus der Gruppe der Fettsäureoxazolinmaleinate und -methacrylate. Die erfindungsgemäß hergestellten modifizierten Polysaccharide, wie Stärke oder Cellulose, zeigen hydrophobe Eigenschaften und können außerdem durch die enthaltenen reaktiven Gruppen für eine reaktive Kopplung mit funktionalisierten Polymeren, beispielsweise Polyestern, unter Erhalt homogener, hydrophober Blendpolymere eingesetzt werden.

### Stand der Technik

Für eine Erweiterung der materialwirtschaftlichen Einsatzgebiete von Stärke ist eine Stärkemodifizierung zur Erhöhung ihrer hydrophoben Eigenschaften wünschenswert.

Eine Möglichkeit der Variation der Eigenschaften von Stärke besteht in ihrer Umsetzung zu Stärkederivaten. So wird in

WO 9504083 A1 die Herstellung bioabbaubarer, hydrophob modifizierter Stärkeester durch Umsetzung von Stärke mit Propionsäureanhydrid in Dimethylsulfoxid (DMSO), katalysiert durch Dimethylaminopyridin (DMAP) und NaHCO₃, beschrieben. Die Herstellung hydrophober Stärkederivate, insbesondere Stärkeacetate durch Umsetzung von Stärke mit einer Mischung von organischer Säure, einem Säurehalogenid oder Säureanhydrid, einem Veresterungskatalysator ( H₂SO₄, ZnCl₂ oder HClO₄) und einem organischen Lösungsmittel (Benzen, Xylen, Toluen, Isopropanol) wird in US 3281411 beansprucht.

Eine schnelle Alkylierung von Stärke unter Erhalt hydrophober Stärkeether in hohen Ausbeuten ist aus GB 1309321 bekannt. Die Alkylierung erfolgt mit Benzylchlorid in einer Mischung von NaOH / Na₂SO₄.

All diese Derivatisierungen stellen mehr oder minder aufwendige Slurry-Reaktionen dar, bei denen Nebenprodukte entstehen und somit anschließende Reinigungsprozesse notwendig machen. EP 0814092 A1 beansprucht die Herstellung eines veresterten, Polyester gepfropften Stärkepolymers durch katalytische Umsetzung von Stärke oder Stärkederivaten mit Lactonen und

Veresterungsreagentien (z.B. Vinylacetat, Vinylpropionat). Die Umsetzung erfolgt in nichtwässrigen organischen Lösungsmitteln (z.B. DMSO, Dimethylformamid/DMF, Pyridin) und anschließenden Fäll- und Waschprozessen.

In verschiedenen Arbeiten wird die Herstellung von Blendpolymeren aus Stärkekomponente und einem Zweitpolymer zur Erzielung günstiger Materialeigenschaften beschrieben. So beansprucht US 5462983 die Herstellung bioabbaubarer, schmelzbarer Produkte aus verträglichen Blends, bestehend aus einem hydrophobem Stärkeester und aus einem bioabbaubarem Polyester. In EP 0606923 A2 wird die Herstellung schmelzbarer, bioabbaubarer Zusammensetzungen beschrieben, die Polyester und Stärke enthalten (z.B. Stärke / Hydroxyalkansäurepolyester-Blends). Als problematisch erweisen sich bei Blends aus voneinander unabhängigen unterschiedlichen Polymeren oftmals Phasenseparationen, sodass zusätzliche Haftvermittler o.ä. notwendig werden.

### Aufgabe der Erfindung

Aufgabe der vorliegenden Erfindung ist die Herstellung modifizierter Polysaccharide mit verbesserten hydrophoben Eigenschaften und damit einer Erweiterung der Einsatzmöglichkeiten. Zugleich sollen die vorgenannten Nachteile des Standes der Technik vermieden werden.

Die Aufgabe wird erfindungsgemäß dadurch gelöst, dass Polysaccharide, vorzugsweise native bzw. modifizierte Stärke oder Cellulose durch direkte, radikalisch initiierte Pfropfung mit bifunktionellen Verbindungen aus der Gruppe der Fettsäureoxazolinmaleinate oder -methacrylate unter Einführung reaktiver Gruppen hydrophob modifiziert werden:

Radikalische Pfropfung von Stärke oder Cellulose mit Fettsäureoxazolinderivaten, nämlich Ricinoloxazolinmaleinat oder - methacrylat:

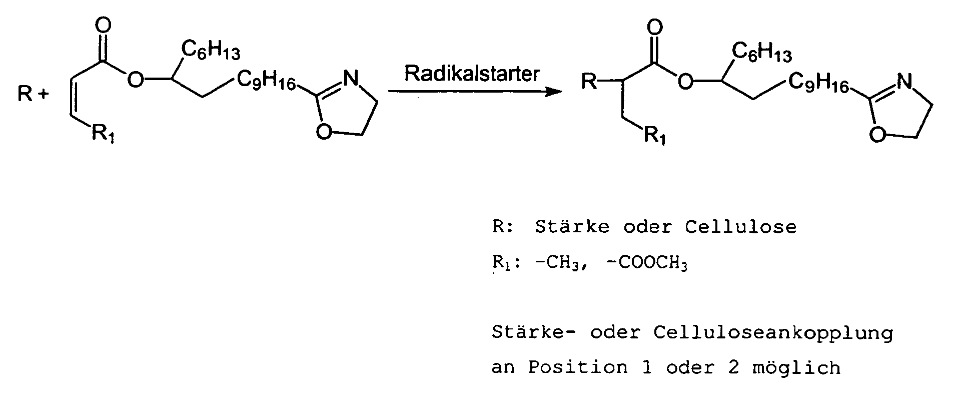

Die Umsetzung kann sowohl nach vorheriger Mischung der Polysaccharidkomponente mit dem Radikalstarter und dem bifunktionellen Reagenz direkt in einem Knetaggregat erfolgen als auch unter kontinuierlicher Zudosierung von Radikalstarter und bifunktioneller Komponente beispielsweise in einem Extruder. Die Temperaturführung während der Umsetzung liegt je nach Polysaccharidverbindung und Pfropfreagenz zwischen 120 und 180°C, vorzugsweise zwischen 130 und 160°C. Als Radikalstarter sind insbesondere Verbindungen einsetzbar, deren Halbwertszeiten bei Verarbeitungstemperatur ca. 30 bis 40 s betragen, wobei sich Bis(α,α-dimethylbenzyl)peroxid sowie Tertiärbutylperbenzoat als besonders geeignet erwiesen. Die Pfropfung kann mit guten Ausbeuten mit unterschiedlichen Pfropfgehalten durchgeführt werden, vorzugsweise zwischen 1 und 30 Ma-% Pfropfreagenz, bezogen auf Polysaccharidkomponente.

Durch die Pfropfung mit bifunktionellen Verbindungen sind hydrophob modifizierte, reaktive Gruppen tragende Stärkeverbindungen erhältlich, die aufgrund ihrer speziellen Eigenschaften für verschiedene Anwendungen in der Farben- und

Papierindustrie interessant sind. Außerdem besteht durch die Bifunktionalität des Pfropfreagenzes auch die Möglichkeit einer reaktiven Kopplung mit anderen Polymeren, die entsprechende funktionelle Gruppen, wie z.B. Carboxyl-, Amino-, Mercapto- oder Epoxygruppen, tragen. Beispielsweise sind durch reaktive Kopplung dieser modifizierten Stärkeverbindungen mit bioabbaubaren Polyestern über Esteramidgruppen vernetzte homogene Stärke-Polyesterblends ohne zusätzliche Haftvermittler gemäß folgender Gleichung herstellbar:

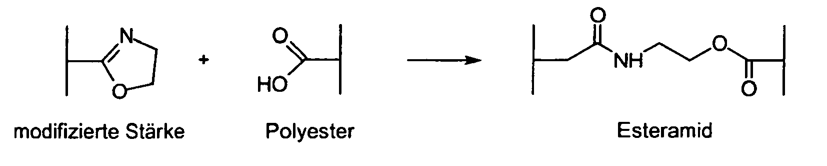

Die Pfropfung von Stärke und anschließende reaktive Kopplung mit funktionalisierten Polymeren kann vorteilhaft auch in einer gekoppelten Umsetzung beispielsweise in einem Extruder erfolgen, indem im vorderen Teil zunächst Stärke, Pfropfkomponente und Radikalstarter eingespeist werden und in einem späteren Abschnitt der Extruderschnecke die Dosierung des funktionalisierten Polymeren erfolgt.

Hydrophobierte Stärke oder Cellulose ist durch ein gegenüber nativer Stärke oder Zellulose deutlich verringertes Wasseraufnahme- (Quellungs-) verhalten und eine verringerte Löslichkeit in Wasser gekennzeichnet.

Die Erfindung soll an folgenden Beispielen erläutert werden.

### Beispiele

### Beispiel 1

65 g thermoplastische Stärke, die unter Zusatz von 25% Glycerin, 1% C₁₆/C₁₈-Fettalkohol und 1% gefällter Kieselsäure thermoplastifiziert wurde, wird bei 120°C in eine Knetkammer eingebracht und geknetet. Danach werden 4,75 g Ricinoloxazolinmaleinat, gemischt mit 0,47 g Bis-(α,α-Dimethylbenzyl)peroxid, zudosiert. Nach Erhöhung der Temperatur auf 140°C wird 30 min bei 25 rpm geknetet.

Es wird eine beigefarbene Schmelze erhalten.

Nach Mahlung und Extraktion mit Methanol bzw. Kohlenwasserstoffen wurde das Produkt analytisch charakterisiert und folgende Werte erhalten:

| | |
|---|---|
| Stickstoffgehalt: | 0,20% |
| Durchschnittlicher Substitutionsgrad (DS): | 0,034 |
| Pfropfausbeute: | 91% |

Eine IR-spektroskopische Auswertung ist durch das Auftreten eines Signals bei ca. 1731 cm⁻¹ möglich, welches der CO-Schwingung der Maleinatgruppierung zugeordnet werden kann und gegenüber dem Signal des Ausgangsstoffes Ricinoloxazolinmaleinat erwartungsgemäß zu höheren Wellenzahlen verschoben ist.

### Beispiel 2

65 g native Kartoffelstärke wird mit 19,5 g Ricinoloxazolinmaleinat und 1,95 g Bis-(α,α-Dimethylbenzyl)peroxid gemischt und bei 120°C in eine Knetkammer eingebracht. Anschließend wird die Temperatur auf 160°C erhöht und 30 min bei 25 rpm geknetet.

Erhältlich ist ein hellbraunes, pulverförmiges Produkt, das nach Extraktion in Methanol analytisch charakterisiert wurde.

| | |
|---|---|
| Stickstoffgehalt: | 0,67% |
| DS: | 0,098 |
| Pfropfausbeute: | 88% |

IR-spektroskopisch wurde eine starke Bande bei 1730 cm⁻¹ nachgewiesen.

Mittels ¹H-NMR-Spektroskopie konnten nach Peracylierung die CH₂-Ringprotonen des Oxazolinringes ohne signifikante Verschiebung gegenüber dem Ausgangsmaterial und damit der Erhalt des Oxazolinringes bei der Pfropfreaktion nachgewiesen werden.

### Beispiel 3

Kationisch modifizierte Kartoffelstärke (N-Gehalt: 0,21%, DS: 0,035) wird mit 5 Ma-% (bezogen auf Stärke) Ricinoloxazolinmethacrylat und 10 Ma% (bezogen auf Ricinoloxazolinmethacrylat) Tertiärbutylperbenzoat bei 160°C und einer mittleren Verweilzeit von ca. 15 min extrudiert. Erhältlich ist ein hellbeige gefärbtes Granulat mit einem N-Gehalt von 0,37% (effektiv 0,16% durch Pfropfung), einem DS von 0,019 und einer Pfropfausbeute von 92% (nach Extraktion zur Entfernung unumgesetzter Ausgangsstoffe).

### Beispiel 4

Mit 10 Ma-% Ricinoloxazolinmaleinat gepfropfte TPS (Produkt aus Beispiel 1) wird in einem Knetaggregat bei 160°C 30 min unter Zusatz von bioabbaubarem Polyester EASTAR BIO im Verhältnis Stärkekomponente zu Polyester = 50:50 bzw. 65:35 geknetet und reaktiv gekoppelt. Erhältlich ist ein hellbraunes, optisch homogenes Blendpolymer, welches bei der elektronenmikroskopischen Untersuchung der Bruchstellen ebenfalls sehr homogene Strukturen zeigt.

### Beispiel 5

Thermoplastifizierte Kartoffelstärke wird mit 10 Ma-% (bezogen auf Stärke) Ricinoloxazolinmaleinat und 10 Ma% (bezogen auf Ricinoloxazolinmaleinat) Bis-(α,α-Dimethylbenzyl)peroxid in die Reaktionszone 1 des Extruders eingebracht. Nach einer mittleren Verweilzeit von ca. 15 min bei einer Extrudertemperatur von 137°C werden 40% (bezogen auf den Massestrom der modifizierten Stärke) eines bioabbaubaren Polyesters EASTAR BIO eingetragen. Es schließt sich eine Reaktionszone 2 mit einer Massetemperatur von 160°C und einer mittleren Verweilzeit von 7 min an. Das Produkt wird über eine 150 µm-Foliedüse mit einer mittleren Abzugsgeschwindigkeit von 0,25 m/min ausgetragen.

Erhältlich ist ein homogenes Folieprodukt mit folgenden Eigenschaften :

| | |
|---|---|
| Höchstzugkraft: | 9,3 N/mm² |
| Höchstzugkraftdehnung: | 645% |
| E-Modul: | 57 N/mm² |

### Beispiel 6

40 g Eukalyptuszellstoff (DP-Cuoxam: 529) wird unter Zusatz von 10,7 g Ricinloxazolinmaleinat und 1,1 g Bis-(α,α-Dimethylbenzyl)peroxid in eine mit Stickstoff gespülte Knetkammer eingebracht und bei 120°C und 25 rpm 30 min geknetet. Nach Extraktion mit Methanol bzw. Kohlenwasserstoffen wurde das Produkt analytisch charakterisiert und folgende Werte erhalten:

| | |
|---|---|
| Stickstoffgehalt: | 0,40% |
| Durchschnittlicher Substitutionsgrad (DS): | 0,056 |
| Pfropfausbeute: | 56% |
| DP-Cuoxam: | 456 |

## Patentansprüche

1. Verfahren zur Herstellung von modifizierten Polysacchariden mit reaktiven Gruppen und verbesserten hydrophoben Eigenschaften, **dadurch gekennzeichnet, dass** man native oder modifizierte Stärke oder Cellulose mit Ricinoloxazolinmaleinat oder -methacrylat, unter Zusatz eines Radikalstarters, pfropft, wie durch die Reaktionsgleichung (1) wiedergegeben wird: 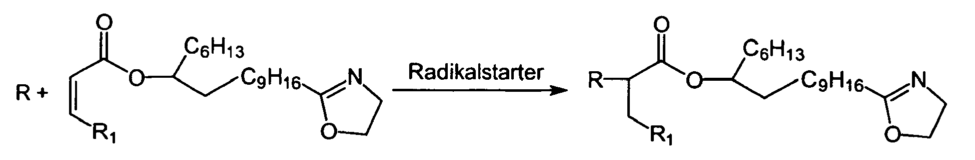 und worin
R eine Stärke oder Cellulose und
R_{1:} -CH₃ oder -COOCH₃
sind.

2. Verfahren nach Anspruch 1, **dadurch gekennzeichnet, dass** die Pfropfung bei Temperaturen zwischen 120 und 180°C, vorzugsweise zwischen 130 und 160°C duchgeführt wird.

3. Verfahren nach Anspruch 1 oder 2, **dadurch gekennzeichnet, dass** Radikalstarterzusätze zum Einsatz kommen, deren Halbwertszeiten bei der Verarbeitungstemperatur ca. 30 bis 40 s betragen und dies vorzugsweise Bis(α,α-dimethylbenzyl)peroxid oder Tertiärbutylperbenzoat sind.

4. Verfahren nach Ansprüchen 1 bis 3, **dadurch gekennzeichnet, dass** die radikalische Pfropfung nach vorheriger Mischung der Stärke- oder Cellulosekomponente mit dem Radikalstarter und dem bifunktionellen Reagenz durchgeführt wird.

5. Verfahren nach Ansprüchen 1 bis 3, **dadurch gekennzeichnet, dass** die radikalische Pfropfung durch Zudosierung während der Reaktion direkt in einem Knetaggregat oder unter kontinuierlicher Zudosierung von Radikalstarter und bifunktioneller Komponente in einem Extruder erfolgt.

6. Verfahren zur reaktiven Kopplung von modifizierter Stärke oder Cellulose, hergestellt nach einem der Ansprüche 1 bis 5, **dadurch gekennzeichnet, dass** die mit Ricinoloxazolinmaleinat oder -methacrylat gepfropfte Stärke oder Cellulose mit weiteren Polymeren, aufweisend funktionelle Gruppen umfassend Carboxyl-, Amino-, Mercapto- oder Epoxygruppen, insbesondere biologisch abbaubaren Polyestern, reaktiv gekoppelt wird.

7. Verfahren nach Anspruch 6, **dadurch gekennzeichnet, dass** die reaktive Kopplung der mit Ricinoloxazolinmaleinat oder - methacrylat gepfropften Stärke oder Cellulose mit funktionellen Polymeren in einem zweiten Reaktionsschritt in einem Knetaggregat oder Extruder durchgeführt wird.

8. Verfahren nach Anspruch 7, **dadurch gekennzeichnet, dass** die Pfropfung von Stärke oder Cellulose und die reaktive Kopplung mit funktionellen Polymeren in einer gekoppelten Umsetzung, in einem Extruder durchgeführt wird, wobei im vorderen Teil zunächst Stärke oder Cellulose, Pfropfkomponente und Radikalstarter eingespeist werden und in einem späteren Abschnitt der Extruderschnecke die Dosierung des funktionalisierten Polymeren erfolgt.

9. Produkt, hergestellt nach einem der vorhergehenden Ansprüche.

## Claims

1. Method for the production of modified polysaccharides with reactive groups and improved hydrophobe properties, **characterised in that** one grafts native or modified starch or cellulose with ricinoloxazolinmaleinate or -methacrylate, under addition of a radical initiator, as expressed by the following reaction's equation: 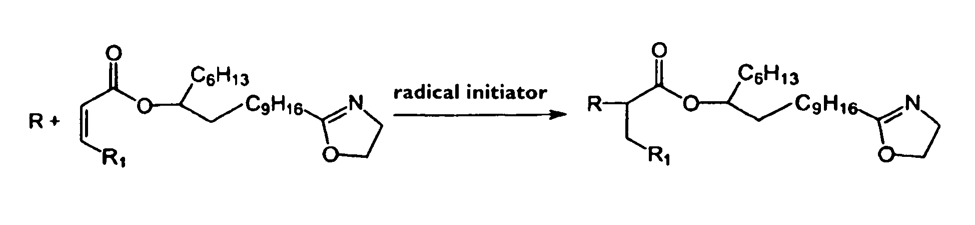 and wherein
R is a starch or a cellulose and
R₁: is -CH₃ or -COOCH₃.

2. Method according to claim 1, **characterised in that** the grafting is carried out at temperatures between 120 and 180°C, preferably between 130 and 160°C.

3. Method according to claim 1 or 2, **characterised in that** radical initiator additives are applied, the half-lives of which at the processing temperature are roughly 30 to 40 s and these preferably being bis(α,α-dimethylbenzyl)peroxide or tertiary-butylperbenzoate.

4. Mehtod according to claims 1 to 3, **characterised in that** the radical grafting is carried out after the prior mixing of the starch or cellulose component with the radical initiator and the bifunctional reagent.

5. Method according to claims 1 to 3, **characterised in that** the radical grafting is carried out by direct metered addition during the reaction in a kneading device or under continuously metered addition of radical initiator and bifunctional component in an extruder.

6. Method for the reactive coupling of modified starch or cellulose, prepared according to one of the claims 1 to 5, **characterised in that** the starch or cellulose, grafted with ricinoloxazolinmaleinate or - methacrylate is reactively coupled with further polymeres, particularly biologically degradable polyesters, having functional groups, comprising carboxyl-, amino-. mercapto-, or epoxygroups.

7. Method according to claim 6, **characterised in that** the reactive coupling of the starch or cellulose, grafted with ricinoloxazolinmaleinate or -methacrylate, with functional polymeres is carried out in a second reaction step in a kneading device or extruder.

8. Method according to claim 7, **characterised in that** the grafting of starch or cellulose and the reactive coupling with functional polymeres is carried out in a joint processing in an extruder, wherein in the initial part starch or cellulose, grafting-component and radical initiator are injected in a first part and in a later section of the extruder's screw the dosage of the functionalised polymer occurs.

9. Product, prepared according to one of the previous claims.

## Revendications

1. Une méthode de production de polysaccharides modifiés avec des groupes réactifs et des propriétés hydrophobes améliorées, **caractérisée par** le greffage de l'amidon natif ou modifié ou de la cellulose avec du maléate ou du méthacrylate de ricinoloxazolines, en y ajoutant un initiateur radicalaire, laquelle est représentée par l'équation de réaction (1) suivante: 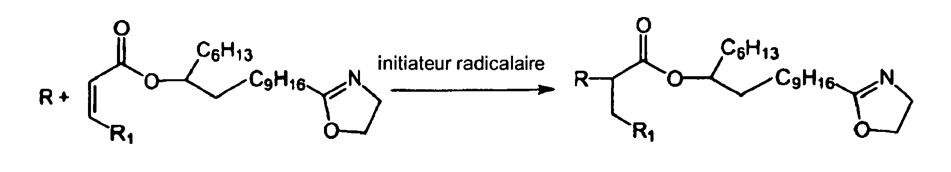 et dont
R est un amidon ou une cellulose, et
R₁: est -CH₃ ou -COOCH₃.

2. Une méthode de production conformément à la revendication 1, **caractérisée par le fait que** le greffage est effectué à des températures entre 120 et 180°C, de préférence entre 130 et 160°C.

3. Une méthode de production conformément à la revendication 1 ou 2, **caractérisée par le fait que** des additifs d'initiateur radicalaire sont utilisés, dont les temps de demiréaction sont de 30 à 40 s à température de production et que ceux-ci sont de préférence le bis(α, α-diméthylbenzène)peroxyde ou le butylperbenzoate tertiaire.

4. Une méthode de production conformément aux revendications 1 à 3, **caractérisée par le fait que** le greffage radicalaire est effectué après avoir mélangé les composants d'amidon ou de cellulose avec l'initiateur radicalaire et l'agent chimique bi-fonctionnel.

5. Une méthode de production conformément aux revendications 1 à 3, **caractérisée par le fait que** le greffage radicalaire est effectué par addition directe pendant la réaction dans un agrégat de malaxage ou par addition continue d'un initiateur radicalaire et d'un agent chimique bi-fonctionnel dans une extrudeuse.

6. Une méthode pour le couplage réactif d'amidon ou de cellulose modifiés, produits conformément aux revendications 1 à 5, **caractérisée par le fait que** l'amidon ou la cellulose greffés avec du maléate ou du méthacrylate de ricinoloxazolines sont couplés par réaction avec d'autres polymères, particulièrement les polyesters biodégradables, ayant des groupes fonctionnels, comprenant le groupe carboxyle, le groupe aminé, le groupe thiol ou le groupe époxyde.

7. Une méthode de production conformément à la revendication 6, **caractérisée par le fait que** le couplage réactif de l'amidon ou de la cellulose, greffés avec du maléate ou du méthacrylate de ricinoloxazolines, est effectué dans une seconde étape de réaction avec des polymères fonctionnels dans un agrégat de malaxage ou dans une extrudeuse.

8. Une méthode de production conformément à la revendication 7, **caractérisée par le fait que** le greffage de l'amidon ou de la cellulose et le couplage réactif avec des polymères fonctionnels sont exécutés dans une extrudeuse par un traitement jumelé, lors duquel l'amidon ou la cellulose, les composants de greffage et l'initiateur radicalaire sont injectés d'abord dans une première section, puis, le dosage du polymère fonctionnalisé est effectué dans une section postérieure de la vis d'extrudeuse.

9. Un produit fabriqué conformément à l'une des revendications sus-mentionnés.
